# EUROPÄISCHE PATENTSCHRIFT

(11) **EP 2 428 436 B1**
(45) Veröffentlichungstag und Bekanntmachung des Hinweises auf die Patenterteilung: **05.11.2014**
(21) Anmeldenummer: 11005834.4
(22) Anmeldetag: 14.09.2010
(51) Int. Cl.: B62D 55/30

(54) **Raupenfahrwerk**
Track assembly
Train de roulement à chenilles

(43) Veröffentlichungstag der Anmeldung: 14.03.2012
(62) Teilanmeldung aus: 10009566.0
(73) Patentinhaber: Joseph Vögele AG, 67067 Ludwigshafen (DE)
(72) Erfinder: Braun, Arthur, 67146 Deidesheim (DE)
(74) Vertreter: Grünecker, Kinkeldey, Stockmair & Schwanhäusser

(56) Entgegenhaltungen:
- EP-A1- 2 050 664
- DE-A1- 3 725 742
- US-A- 4 059 314
- US-A1- 2007 029 878

## Beschreibung

Die Erfindung betrifft ein Raupenfahrwerk gemäß Oberbegriff des Patentanspruchs 1.

In Baumaschinen, wie insbesondere Straßenfertigern, umfasst das Fahrwerk zumeist zwei Raupen-Fahrschiffe jeweils mit einem Raupenfahrwerk pro Seite. Das Raupenfahrwerk weist einen stabilen Rahmen auf, in welchem neben Lauf- und Tragrollen und einem Antriebsturas (Antriebskettenrad) zumindest ein Leitrad mit Spannvorrichtung für die Raupenkette angeordnet sind. Die Antriebsleistung wird auf den Antriebsturas übertragen, der beispielsweise das untere Trum der Raupenkette zieht und straff hält. Die Spannvorrichtung hält über das Leitrad die Raupenkette mit gewünschter Spannung. Bei Stoßbelastungen oder im Falle eingeklemmter Objekte gibt das Leitrad gegen die Spannvorrichtung nach. Es sind unterschiedliche Spannvorrichtungstypen gebräuchlich. Ein Typ weist eine starke Spiral- oder Schraubenfeder oder ein Ringfederpaket (DE 296 06 295 U) auf, und gegebenenfalls einen Spannzylinder, dessen Kolbenstange durch eine Fettfüllung mittels einer Fettpresse ausgeschoben wird, bis die Raupenkette über das Leitrad leicht durchhängend vorgespannt ist. Ein anderer Typ umfasst ein Zylinder-Kolben-Spannmittel (DE 35 26 437 A), das mit einer viskosen, kompressiblen Elastomerflüssigkeit gefüllt ist (www.tfwfahrtechnik.ch "Elastomerspanner") und die Vorspannung anstelle einer aus Stahl bestehenden Spiral- oder Schraubenfeder (DE 40 25 929 A) erzeugt. Ein weiterer Typ weist als Spannmittel eine Gasdruckfeder mit einem Stickstoffspeicher auf.

Ein solches aus EP 2 050 664 A bekanntes Raupenfahrwerk enthält im Rahmen die als U-förmiges Maul ausgebildete Leitrad-Linearführung zwei beiderseits des Rahmens angeordnete Leiträder, deren gemeinsame Achse in dem Führungsstück gelagert ist, das in der Linearführung sitzt und von Führungsplatten in Querrichtung abgestützt wird. Die Spannvorrichtung weist als Spannglied einen oder zwei parallele Spannzylinder auf, die an einem im Rahmen gelagerten Spannhebel angreifen, der auf das Führungsstück einwirkt, und zwar über einen Gleitstein, der die unterschiedlichen Relativbewegungen des Führungsstückes und des Spannhebels bei der Kraftübertragung ausgleicht. Das Spannglied kann ein hydraulischer Spannzylinder sein, oder eine mechanische Spanneinheit oder eine Druckfeder.

Bei einem aus US 4 059 314 A bekannten Raupenfahrwerk ist als Spannmittel der Achse des Leitrades eine nachgiebige elastomere Hülse mit zylindrischer Form und einer inneren Durchgangsöffnung für eine Führungsstange vorgesehen. Die Hülse ist zwischen zwei mit ihren offenen Seiten zueinander weisenden Tellern eingespannt, deren einer stationär abgestützt ist, während der andere über eine Schubstange mit der Achse des Leitrades über eine Schiebeführung gekuppelt ist. Das Material der Hülse ist Gummi oder ein passendes Elastomermaterial, das dank hoher Vorspannung einen hohen und progressiv zunehmenden Verformungswiderstand leistet.

Aus DE 37 25 742 A ist ein walzenförmiger Formkörper bekannt, der radial oder quer zur Achse belastet wird. Der Formkörper ist auch für Raupenketten-Bandagen einsetzbar und so aufgebaut, dass hartelastische Körper kleiner Abmessung von metallischer oder metall- oder gesteinsähnlicher Beschaffenheit durch chemische Bindemittel statistisch verteilt oder auch exakt positioniert in eine gummielastische Funktionsschicht eingebunden sind, um allgemein oder partiell eine deutliche Erhöhung des dynamischen Elastizitäts-Moduls zu erreichen.

In Verbindung mit dem aus DE 296 16 216 U bekannten Raupenfahrwerk werden Versuche mit Elastomer-Federelementen anstelle mechanischer Schraubenfedern erwähnt, die jedoch wegen ihres stark temperaturabhängigen E-Moduls und zu geringer Vorspannkräfte sowie Blocklasten als nachteilig oder unbrauchbar bezeichnet werden. Ausbildung und Installation solcher erwähnter Elastomer-Federelemente werden nicht offenbart. In der Praxis wurden jedoch bereits 1980 diese Elastomer-Federelemente entsprechend www.tfwfahrtechnik.ch "Elastomerspanner" versucht, die als vorgespannte Zylinder mit kompressibler transparenter Elastomerflüssigkeit gefüllt waren.

Aus JP 62-67882 A ist ein Raupenfahrwerk bekannt, bei dem die Vorspannvorrichtung für das als Schraubenfeder ausgebildete Spannmittel der Spannvorrichtung einen schützenden Elastomer-Faltenbalg aufweist.

Der Erfindung liegt die Aufgabe zugrunde, ein strukturell und belastungsorientiert in Bezug auf die Leitrad-Spannfunktion und/oder Leitrad-Abstützung im Rahmen verbessertes Raupenfahrwerk anzugeben, bei dem das Spannmittel bei reduzierter Baugröße hohe Spann- und Dämpfleistung erzielen lässt.

Die gestellte Aufgabe wird mit den Merkmalen des Patentanspruchs 1 gelöst.

Es lässt sich der gegebene Bauraum besser nutzen, wenn als Spannmittel wenigstens ein solcher Elastomerfeder-Körper eingebaut wird, der bei kleiner Baugröße extrem leistungsfähig ist, und vor allem eine sehr flache Dämpfungskurve hat, die speziell in Baumaschinen, wie Straßenfertigern, wünschenswert ist. Dort wirken sowohl im langsamen Arbeitsfahrbetrieb als auch bei schneller Transportfahrt stoßartige Belastungen auf das Leitrad ein, die gedämpft werden müssen. Der wenigstens eine Elastomerfeder-Körper als Spannmittel der Spannvorrichtung resultiert in einer signifikanten strukturellen und belastungsorientierten Verbesserung des Raupenfahrwerks, weil der Elastomerfeder-Körper bei relativ kleiner Baugröße extrem leistungsfähig ist, somit viel Bauraum einsparen lässt, und belastungsorientiert die Leitrad-Spannfunktion und mit einer wünschenswert flachen Dämpfungskurve die Dämpfungsfunktion optimieren lässt. Dies ist besonders zweckmäßig für Baumaschinen, wie Straßenfertiger, die langsame Arbeitsfahrgeschwindigkeiten bei hohem Leistungsbedarf und relativ höhere Transportfahrgeschwindigkeiten fahren müssen, wobei jeweils ein relativ hoher Gleichförmigkeitsgrad gewährleistet und das Fahrgeräusch so gering wie möglich sein soll (Körperschallübertragung). Dies sind nämlich an sich eigentlich konträre Anforderungen für ein Raupenfahrwerk. Der Elastomerfeder-Körper bietet jedoch neben der hohen Leistungsdichte den wichtigen Vorteil eines relativ großen Verformungshubes und einer relativ flachen Dämpfungskurve, d.h., einer unabhängig vom Verformungshub relativ gleichförmigen Dämpfung. Dabei ist der Elastomerfeder-Körper annähernd zylindrisch mit weitgehend ebenen Endflächen zur Kraftübertragung und einer Führungsbolzen-Mittellängsbohrung ausgebildet. Der Elastomerfeder-Körper wird axial und so eingebaut, dass er zum Ausbauchen genügend Freiraum nach außen hat. Als Elastomer-Werkstoff für den Elastomerfeder-Körper ist hochfester Natur- und/oder Synthese-Kautschuk zweckmäßig. Vorzugsweise handelt es sich dabei um einen Chloropren-Kautschuk oder einen Polyurethan-Kautschuk mit einer Shore-A-Härte > 60 Shore oder sogar > 70 Shore, vorzugsweise bis zu einer Shore-A-Härte von etwa 90 Shore oder mehr. Jeder Elastomerfeder-Körper zeichnet sich bei relativ kleiner Baugröße durch hohe Leistungsfähigkeit und beträchtlichen Verformungsweg aus, wobei er eine wünschenswert flache Dämpfungskurve zeigt.

Derartige Elastomerfeder-Körper, beispielsweise aus hochfestem Natur-Kautschuk oder Synthese-Kautschuk, werden zur Dämpfung in Karosseriebauteil-Pressen in der Automobilindustrie eingesetzt, siehe beispielsweise die technische Informationsschrift der Firma Effbe GmbH, "ELASTOMER FEDERN von EFFBE" 07/2003, Seiten 1 - 13 (Firma Effbe GmbH, Hanauer Landstraße 16, 63628 Bad Soden-Salmünster, Hessen, http://www.effbe.com).

Zweckmäßig sind mehrere Elastomerfeder-Körper in Reihe und/oder parallel geschaltet, wobei eine Reihenschaltung den Vorteil eines relativ großen Verformungshubs bietet. Dann sollten zwischen den in Reihe geschalteten Elastomerfeder-Körpern Federteller zwischengelegt, und ein durchgehender Führungsbolzen zur mechanischen Führung und Zentrierung vorgesehen werden. Der Elastomerfeder-Körper kann freiliegend installiert sein, oder mit das Ausbauchen zulassendem Radialspiel eingekapselt sein. Die kreiszylindrische Form des Elastomerkörpers ist eine zweckmäßige Option, es könnten auch andere Querschnittsformen gewählt werden. Im Regelfall ist die axiale Länge des Elastomerfeder-Körpers größer als dessen Außendurchmesser. Elastomerfeder-Körper sind in unterschiedlichen Spezifikationen zu relativ günstigen Kosten im Handel erhältlich, sind dauerelastisch und bruchsicher und innerhalb eines weiten Temperaturbereiches einsetzbar. Es kann jedoch erforderlich sein, den Elastomerfeder-Körper vor dem Arbeitseinsatz mehrfach, z.B. zehnmal, zusammenzudrücken, um ihn setzen zu lassen. Der Temperatureinsatzbereich liegt beispielsweise zwischen -20°C bis +80°C, und kann sich kurzzeitig sogar von -40°C bis zu 120°C erstrecken. Er ist beständig gegen Öl und Schmieröl, Fett, Alkohol, Waschbenzin, Wasser, Ozon, Laugen und Säuren. Zur Gewährleistung eines kraftschlüssigen Federeinsatzes ist auch wegen der Setzneigung eine Vorspannung zweckmäßig, die größer sein sollte als die Setzneigung. Der mögliche Federweg kann zwischen etwa 30 % und 40 % der axialen Länge betragen, wobei die Setzneigung ausgehend von der Ursprungslänge zwischen etwa 3 % bis etwa 8 % betragen kann.

Zweckmäßig ist bei nicht axial zusammengedrücktem Elastomerfeder-Körper dessen axiale Länge größer als der Außendurchmesser, um einen möglichst langen Federweg zu erzielen.

Ferner kann es günstig sein, die Endflächen des Elastomerfeder-Körpers plan oder erhaben oder freigesenkt auszubilden.

Die weitere Linearführung minimiert ungünstige Belastungssituationen für das Leitrad, indem beispielsweise von der Spannvorrichtung keine oder nur für eine ordnungsgemäße Leitrad-Spannfunktion in der Raupenkette ohne weiteres tolerierbare Kippmomente auf das Leitrad aufgebracht werden. Die weitere Linearführung hält nämlich die Spannvorrichtung stabil und zentriert und überträgt die Spannkräfte bzw. Reaktionskräfte des Leitrades ohne Kippmomente ausschließlich in der Führungsrichtung. Dies bedeutet, dass die Leitrad-Linearführung von Querkräften aus dem Arbeiten der Spannvorrichtung (beim Spannen der Raupenkette in der einen Richtung, beim Nachgeben des Leitrades gegen die Kraft der Spannvorrichtung in der anderen Richtung) vollständig von quer zur Führungsrichtung orientierten Kraftkomponenten der Spannvorrichtung isoliert ist, da Querkomponenten über das Gleitstück in der weiteren Linearführung aufgenommen werden.

Eine sehr stabile und leichtgängige Führung des Gleitstückes in der weiteren Linearführung ist möglich, wenn das Gleitstück als Basis einer Portalstruktur mit zwei an Portalau-βenwänden außenliegenden Führungsleisten ausgebildet ist. An einem Portalquerjoch, das die Portalaußenwände stabilisierend verbindet, ist ein sich zum Führungsstück des Leitrades erstreckendes Druckelement angebracht. Die Führungsleisten übernehmen die Führungsaufgabe für das Gleitstück in der weiteren Linearführung und sind, zweckmäßig, austauschbar angebracht. Die Portalstruktur schafft ferner Freiraum für sich beim Arbeiten des Elastomerfeder-Körpers durch das Gleitstück bewegende Ausstattungskomponenten. Bei einer zweckmäßigen Ausführungsform ist wenigstens ein Leitrad zwischen zwei die Leitradachse aufnehmenden, parallelen Führungsstücken angeordnet. Gegebenenfalls wird sogar ein Leitradpaar für die Raupenkette vorgesehen und an den beiden Führungsstücken gelagert. Die Führungsstücke können über einen Verbindungskörper verbunden sein und einen stabilen, beispielsweise U-förmigen Führungsstrukturbauteil bilden. Der Verbindungskörper kann einen Anschluss für das Druckelement aufweisen oder sogar fest mit dem Druckelement verbunden werden. Das Druckelement überträgt einerseits die Spannkraft des Elastomerfeder-Körpers auf das Leitrad, und andererseits Ausweichbewegungen des Leitrades auf den oder die Elastomerfeder-Körper. Die beiden Führungsstücke erzeugen eine sehr stabile Abstützung des Leitrades im Rahmen des Raupenfahrwerks. Alternativ könnte auch ein einziges Führungsstück für ein Leitrad oder für zwei beiderseits des Führungsstückes angeordnete Leiträder vorgesehen und mit dem Druckelement gekoppelt werden.

Um eine saubere und leichtgängige Führung des Leitrades in der Leitrad-Linearführung zu gewährleisten, ist es zweckmäßig, am Führungsstück zumindest ober- und unterseitig Gleitbeläge dort anzuordnen, wo Kontakt zwischen Führungsflächen auftritt. Die Gleitbeläge können beispielsweise aus verschleißfestem, gut gleitendem Hardox-Werkstoff hergestellt sein und werden zweckmäßig auswechselbar festgelegt. Um, vor allem im Hinblick auf geringe Laufgeräusche, und auch zur Dämpfung des Leitrades eine strukturelle Verbesserung zu erzielen, ist zweckmäßig zwischen dem Führungsstück und jedem Gleitbelag eine Dämpfungsschicht vorgesehen. Diese Dämpfungsschicht kann die Form wenigstens eines Kunststoffstreifens haben, der entweder eingelegt oder mit dem Führungsstück und/oder dem Gleitbelag verbunden wird.

Zweckmäßig sind der Gleitbelag und die Dampfungsschicht mittels wenigstens eines Feder-Pass-Elements am Führungsstück befestigt, das sich in etwa senkrecht zur Führungsrichtung in das Führungsstück erstreckt. Solche Feder-Pass-Elemente sind bekannt beispielsweise von www.connexch.com "Connex® Feder-Pass-Elemente".

Anhand der Zeichnungen werden Ausführungsformen des Erfindungsgegenstandes erläutert. Es zeigen:
- Fig. 1: eine perspektivische Schemadarstellung eines Raupenfahrwerks mit einem Leitrad, wobei für die Erfindung nebensächliche bauliche Merkmale, wie Lauf- und Tragrollen oder ein Antriebsturas und auch eine Raupenkette der Übersichtlichkeit halber weggelassen sind, und
- Fig. 2: eine Perspektivdarstellung eines in Fig. 1 schematisch angedeuteten Spannelements in Form wenigstens eines Elastomerfeder-Körpers.

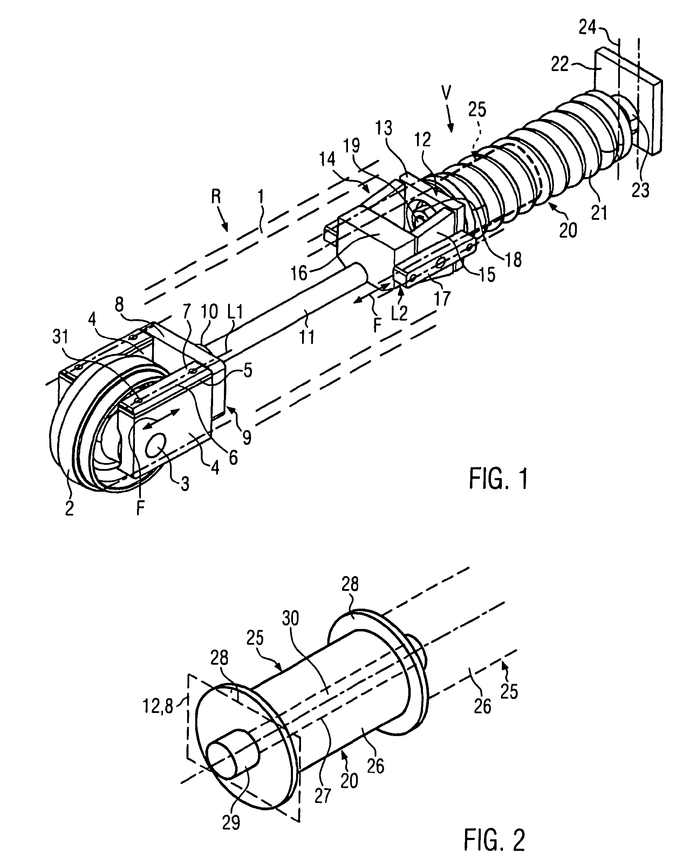

Fig. 1 verdeutlicht ein Raupenfahrwerk R, insbesondere für eine Baumaschine wie einen Straßenfertiger (nicht gezeigt), wobei das Raupenfahrwerk R einen Rahmen 1 (beispielsweise eine hochkantverbaute Stahlplatte) aufweist, an der neben nicht gezeigten Trag- und Laufrollen für eine nicht gezeigte Raupenkette auch ein Antriebsturas (Antriebskettenrad, nicht gezeigt) angeordnet sein kann, wobei die Raupenkette über ein Leitrad 2 geführt ist, das eine Raupenketten-Spannfunktion in dem Raupenfahrwerk R erbringt und durch eine Spannvorrichtung V die Raupenkette vorspannt, jedoch gegen die Kraft der Spannvorrichtung V unter Stoßbelastungen nachgibt. Alternativ könnten auch zwei oder mehr nebeneinanderliegende Leiträder 2 vorgesehen sein (nicht gezeigt).

Das Leitrad 2 ist mit einer Leitradachse 3 in einer Leitrad-Linearführung L1 des Rahmens 1 in einer Führungsrichtung F beweglich geführt, und zwar über zwei parallele, blockartige Führungsstücke 4. Jedes Führungsstück 4 trägt zumindest ober- und unterseitig je einen Gleitbelag 6, beispielsweise in Form einer Leiste aus einem verschleißfesten, gleitfreudigen Hardox-Werkstoff. Der Gleitbelag 5 ist zweckmäßig austauschbar (mittels Befestigungselementen 7) am Führungsstück 4 angebracht. Zwischen jedem Gleitbelag 6 und dem Führungsstück 4 ist eine Dämpfungsschicht 5 vorgesehen, beispielsweise ein Kunststoffstreifen, der entweder lose eingelegt oder mit dem Gleitbelag 6 und/oder dem Führungsstück 4 verbunden ist, z.B. stoffschlüssig verbunden ist. Die beiden Führungsstücke 4 sind in den gezeigten Ausführungsformen über einen Verbindungskörper 8 in Form einer viereckigen stabilen Platte zu einem U-förmigen Führungsstrukturbauteil 9 vereinigt, zwischen dessen Schenkeln das Leitrad 2 oben, unten und an einer Frontseite vorstehend untergebracht ist. Die Leitrad-Linearführung L1 kann im Rahmen 1 maulförmig oder schachtförmig geformt oder eingebaut sein (nicht im Detail gezeigt), und greift am Führungsstück 4 zumindest über die Gleitbeläge 5 an.

Das Befestigungselement 7 ist zweckmäßig ein Feder-Pass-Element 31, das in etwa senkrecht zur Führungsrichtung F in Bohrungen eingepasst ist und sich bis in das Führungsstück 4 erstreckt. Solche Feder-Pass-Elemente 31 sind beispielsweise wellenzahnförmig längs geschlitzte Federstahlhülsen aus hochwertigem Chrom-Vanadium-Stahl, sind montagefreundlich und garantieren beim Fügen mehrerer Bauteile festen Sitz über lange Standzeiten.

Am Verbindungskörper 8 ist ein Anschluss 10, beispielsweise ein Rohransatz, zur Kopplung des Führungsstrukturbauteiles 9 mit einem Druckelement 11 vorgesehen, das bei der gezeigten Ausführungsform ein Rundrohr oder massives Rundprofil ist und sich im Wesentlichen parallel zur Führungsrichtung F zu einer weiteren Linearführung L2 des Raupenfahrwerks R und somit zur Spannvorrichtung V erstreckt. In der weiteren Linearführung L2, die dieselbe Führungsrichtung F hat, wie die Leitrad-Linearführung L1, ist ein Gleitstück 12 verschiebbar geführt, das beispielsweise als quadratische oder runde Platte 13 mit einer Innenbohrung 18 ist und als Universalwiderlager für ein Spannmittel 20 der Spannvorrichtung V dient. Das Gleitstück 12 ist z.B. in einer Portalstruktur 14 an Portalseitenwänden 15 abgestützt, die über ein Portalquerjoch 16 miteinander verbunden sind, an welchem das Druckelement 11 angreift oder fest montiert ist. Zwischen dem Portalseitenwänden 15 und dem Portalquerjoch 16 ist ein Freiraum gebildet, beispielsweise für eine Ausstattung 19 der Spannvorrichtung V, die beim Zusammendrücken der Spannvorrichtung V in der Führungsrichtung F in die Portalstruktur 14 eintaucht. Außen an den Portalseitenwänden 15 (alternativ am Gleitstück 12) sind Führungsleisten 17 angebracht, die in der weiteren Linearführung L2 geführt sind.

Das Spannmittel 20 ist in Fig. 1 z.B. eine Schrauben- oder Spiralfeder 21 aus Federstahl, die am Gleitstück 12 angreift und sich an einer Platte 22 eines im Rahmen 1 vorgesehenen Widerlagers 24 abstützt. Gegebenenfalls enthält die Spannvorrichtung V eine Ausstattungskomponente 23 zum Vorspannen der nicht gezeigten Raupenkette auf dem Leitrad 2, und zwar in der Führungsrichtung F und nach links. Das Spannmittel 20 ist zwischen dem Gleitstück 12 und der Platte 22 mit axialer Vorspannung montiert.

Anstelle der gezeigten Spiral- oder Schraubenfeder 21 aus Stahl ist in die Spannvorrichtung V zumindest ein Elastomerfeder-Körper 25 (gestrichelt angedeutet) eingebaut, wobei dann (nicht gezeigt) das Widerlager 24 näher beim Gleitstück 12 platziert sein kann, als gezeigt (Bauraum-Einsparung).

Die weitere Linearführung L2, die in Fig. 1 nur schematisch angedeutet ist, kann im Rahmen 1 geformte oder dort montierte Führungsbahnen für die an den Portalaußenwänden 15, gegebenenfalls dem Portalquerjoch 16 und/oder Gleitstück 12 angebrachten Führungsleisten 17 aufweisen. Die Linearführungen L1, L2 sind, zweckmäßig, baulich voneinander separiert und in Führungsrichtung F voneinander beabstandet, wobei die Führungsrichtungen F die gleichen oder parallel sind. Die weitere Linearführung L2 nimmt Querkräfte auf, die von der Spannvorrichtung V stammen, und stellt sicher, dass das Druckelement 11 nur Druckkräfte in der Führungsrichtung F auf jedes Führungsstück 4 überträgt (ohne Kippmomente), bzw. dass beim Nachgeben des Leitrades 2 in Fig. 1 nach rechts in Führungsrichtung F keine Querkräfte oder Kippmomente entstehen, da dann auch die Leitrad-Linearführung L1 solche Querkräfte aufnimmt und in den Rahmen 1 überträgt. Die Dämpfungsschicht 5 vermindert das Laufgeräusch des Raupenfahrwerks R, speziell bei höheren Fahrgeschwindigkeiten.

Mit dem wenigstens einen Elastomerfeder-Körper 25 (in Fig. 1 gestrichelt angedeutet) als Spannmittel 20 der Spannvorrichtung V lässt sich erheblich Bauraum einsparen, beispielsweise im Vergleich zu einem Spiral- oder Schraubenfeder-Spannmittel. Ferner lässt sich durch die beiden strukturell separierten Linear-Führungen L1, L2 der im Raupenfahrwerk R verfügbare Bauraum besser ausnutzen, gegenüber einem Konzept, bei welchem die Spannvorrichtung V direkt an dem Leitrad 2 bzw. dem Führungsstrukturbauteil 9 angreift, obwohl auch eine solche Lösung zweckmäßig sein kann, beispielsweise falls als Spannmittel 20 der wenigstens eine Elastomerfeder-Körper 25 verwendet wird, der sich bei relativ kleiner Baugröße durch hohe Leistungsfähigkeit und beträchtlichen Verformungsweg auszeichnet und eine wünschenswert flache Dämpfungskurve zeigt.

Der Elastomerfeder-Körper 25 ist besser in Fig. 2 gezeigt und ist beispielsweise weitgehend kreiszylindrisch mit ebenen Endflächen, an denen Federteller 28, beispielsweise aus Stahl, anliegen können, deren Größe größer ist als die radiale Verformung des Elastomerfeder-Körpers 25 bei axialer Zusammendrückung. Eine Mittellängsbohrung 27 kann zur Aufnahme eines gegebenenfalls vorgesehenen Führungsbolzens 30 dienen, der eine mechanische Führung und Zentrierung des Elastomerfeder-Körpers 25 bei axialer Zusammendrückung sicherstellt und sich durch die Federteller 28 bis in einen Vorsprung 29 erstreckt, der beispielsweise in Fig. 1 in die Mittelbohrung 18 des Gleitstückes 12, oder bei direktem Anschluss des Elastomerfeder-Körpers 25 an den Führungsstrukturbauteil 9 (nicht gezeigt) in die Fassung 10 des Verbindungskörpers 8 eingreift, oder in eine Bohrung im Verbindungskörper 8.

Ferner verdeutlicht Fig. 2, dass mehrere Elastomerfeder-Körper 25 in Reihe geschaltet sein können, vorzugsweise jeweils über zwischengelegte Federteller 28 und einen dann durchgehenden Führungsbolzen 30. Alternativ könnten mehrere Elastomerfeder-Körper 25 nebeneinander parallel geschaltet sein (nicht gezeigt). Auch eine Parallel- und Reihenschaltung der Elastomerfeder-Körper 25 ist möglich, abhängig von den Leistungsanforderungen der Spannvorrichtung V.

Der Elastomerfeder-Körper 25 besteht z.B. aus hochfestem Natur-Kautschuk oder Synthese-Kautschuk, d.h., einem Elastomer-Werkstoff 26, der als Feder inkompressibel, jedoch bei axialer Zusammendrückung ausbauchbar ist. In eingebautem Zustand des Elastomerfeder-Körpers 25 müssen entsprechende Freiräume zum Ausbauchen vorgesehen sein. Falls nur ein Elastomerfeder-Körper 25 als Spannmittel 20 vorgesehen ist, kann ein Führungsbolzen 30 gegebenenfalls weggelassen werden, wie auch die Federteller 28. Die Endflächen des Federkörpers 25 können eben, d.h. plan, erhaben oder freigesenkt ausgebildet sein, wobei die Auflageflächen beispielsweise am Verbindungskörper 8 oder am Gleitstück 12 glatt sein sollten. Die Führung und Zentrierung des Elastomerfeder-Körpers 25 wird idealerweise mit einem Führungsbolzen 30 erreicht, um ein Ausknicken zu vermeiden. In Reihenschaltung addieren sich bei gleichen Federkräften die Einzelfederwege. Hierbei müssen die Elastomerfeder-Körper 25 grundsätzlich geführt werden, z.B. durch den durchgehenden Führungsbolzen 30.

Der Elastomerfeder-Körper 25 in den Fig. 1 und 2 hat eine zylindrische Gestalt mit der Mittellängsbohrung 27, wobei im Regelfall im Ursprungszustand die axiale Länge größer ist als der Außendurchmesser. Der Natur-Kautschuk kann ein Chloropren-Kautschuk sein, während der Synthese-Kautschuk ein Polyurethan-Kautschuk sein kann, wobei Shore-A-Härten > 60, zweckmäßig > 70 und bis 90 Shore oder mehr zweckmäßig sind. Der axiale Federweg beträgt maximal zwischen etwa 40 % bis 30 % der axialen Länge bzw. Ursprungslänge, und ist bei geringeren Shore-A-Härten größer als bei größeren Shore-A-Härten. Der Elastomer-Werkstoff 26 des Elastomerfeder-Körpers 25 hat materialbedingt eine Setzneigung, die etwa 3 % bis etwa 8 % der Ursprungslänge betragen kann, und nach einer bestimmten Anzahl von Lastwechseln im dynamischen Einsatz ihre Grenze erreicht. Zweckmäßig ist der Elastomerfeder-Körper 25 in Axialrichtung vorgespannt, beispielsweise mit einem Faktor von 1,1 bis etwa 1,3. Dabei sollte die Vorspannung größer sein als die Setzneigung. Vor Inbetriebnahme, d.h. endgültiger dynamischer Beanspruchung, sollte der Elastomerfeder-Körper 25 mehrmals be- und entlastet werden, beispielsweise bis zu zehnmal, weil er dann sein Arbeitsverhalten nicht mehr nennenswert verändert (gesetzter Betriebszustand). Der Temperatureinsatzbereich liegt zwischen etwa -20°C und +80°C, wobei kurzfristig Temperaturen von -40°C genauso vertragen werden wie +120°C. Der Elastizitätsmodul nimmt mit zunehmender Temperatur ab. Der Elastomerfeder-Körper 25 zeichnet sich besonders durch eine relativ flache Dämpfungskurve aus. Die Federkraft kann durchaus mehrere 100.000 N betragen.

## Patentansprüche

1. Raupenfahrwerk (R), insbesondere für eine Baumaschine wie einen Straßenfertiger, mit einem eine Leitrad-Linearführung (L1) aufweisenden Rahmen (1), in welchem wenigstens ein die Leitradachse (3) lagerndes Führungsstück (4) verschiebbar ist, das in der linearen Führungsrichtung (F) durch ein Spannmittel (20) einer im Rahmen (1) abgestützten Spannvorrichtung (V) beaufschlagbar ist, wobei als Spannmittel (20) der Spannvorrichtung (V) wenigstens ein unter axialer Zusammendrückung rückstellend ausbauchbar eingebauter, zylindrischer Federkörper (25) mit weitgehend ebenen Endflächen und mit einer Führungsbolzen-Mittellängsbohrung (27) aus einem Elastomer-Werkstoff (26) vorgesehen ist, **dadurch gekennzeichnet, dass** der jeweilige Elastomerfeder-Körper (25) aus einem als Feder weitestgehend inkompressiblen hochfesten Natur- und/oder Synthese-Kautschuk mit einer Shore-A-Härte > 60 Shore besteht.

2. Raupenfahrwerk nach Anspruch 1, **dadurch gekennzeichnet, dass** der Elastomer-Werkstoff (26) Chloropren-Kautschuk oder Polyurethan-Kautschuk ist, vorzugsweise mit einer Shore-A-Härte von etwa 70 Shore bis etwa 90 Shore.

3. Raupenfahrwerk nach Anspruch 1, **dadurch gekennzeichnet, dass** mehrere Elastomerfeder-Körper (25) in Reihe und/oder parallel geschaltet sind, vorzugsweise mit zwischengelegten Federtellern (28) und jeweils einem durch die Mittellängsbohrungen (27) durchgehenden Führungsbolzen (30).

4. Raupenfahrwerk nach Anspruch 1, **dadurch gekennzeichnet, dass** bei nicht axial zusammengedrücktem Elastomerfeder-Körper (25) dessen axiale Länge größer ist als der Außendurchmesser.

5. Raupenfahrwerk nach Anspruch 1, **dadurch gekennzeichnet, dass** die Endflächen des Elastomerfeder-Körpers (25) plan, erhaben oder freigesenkt sind.

6. Raupenfahrwerk nach Anspruch 1, **dadurch gekennzeichnet, dass** im Rahmen (1) zwischen dem Führungsstück (4) in der Leitrad-Linearführung (L1) und dem Elastomerfeder-Körper (25) eine weitere Linearführung (L2) für ein in derselben Führungsrichtung (F) verschiebbares, mit dem Führungsstück (4) gekoppeltes Gleitstück (12) vorgesehen ist, an dem der Elastomerfeder-Körper (25) angreift.

7. Raupenfahrwerk nach Anspruch 6, **dadurch gekennzeichnet, dass** das Gleitstück (12) als Basis in einer Portalstruktur (14) mit zwei an Portalaußenwänden (15) außenliegenden, vorzugsweise austauschbar angebrachten, Führungsleisten (17) und einem mit dem Portalquerjoch (16) verbundenen, langgestreckten Druckelement (11) angeordnet ist.

8. Raupenfahrwerk nach wenigstens einem der Ansprüche 6 bis 7, **dadurch gekennzeichnet, dass** wenigstens ein Leitrad (2) zwischen zwei die Leitradachse (3) aufnehmenden, parallelen Führungsstücken (4) angeordnet ist, die in einem U-förmigen Führungsstrukturbauteil (9) über einen Verbindungskörper (8) verbunden sind, wobei, vorzugsweise, am Verbindungskörper (8) ein Anschluss (10) für ein langgestrecktes Druckelement (11) vorgesehen ist, das sich zu dem vom Elastomerfeder-Körper (25) beaufschlagten Gleitstück (12) erstreckt.

9. Raupenfahrwerk nach Anspruch 6, **dadurch gekennzeichnet, dass** am jeweiligen Führungsstück (4) ober- und unterseitig Gleitbeläge (6), vorzugsweise aus verschleißfestem Hardox-Werkstoff, angeordnet sind, und dass zwischen dem Führungsstück (4) und jedem Gleitbelag (6) eine Dämpfungsschicht (5) angeordnet ist, vorzugsweise in Form wenigstens eines Kunststoffstreifens.

10. Raupenfahrwerk nach Anspruch 9, **dadurch gekennzeichnet, dass** der Gleitbelag (6), und, vorzugsweise, gemeinsam mit diesem die Dämpfungsschicht (5), mittels wenigstens einer senkrecht zur Führungsrichtung (F) bis in das Führungsstück (4) eingreifenden Feder-Pass-Elements (31) festgelegt sind, vorzugsweise mittels einer wellenzahnförmig, längs geschlitzten Federstahl-Passhülse.

## Claims

1. Tracklaying assembly (R), in particular for a construction machine as a road finisher, with a frame (1) comprising an idler wheel linear guide (L1), in which at least one guide piece (4) holding the idler wheel axle (3) is movable, on which guide piece (4) a tensioning means (20) of a tensioning device (V) supported in the frame (1) engages in the linear guiding direction (F), wherein as a tensioning means (20) of the tensioning device (V) at least one cylindrical spring body (25) with largely flat end surfaces and with a central guide pin longitudinal bore (27) is provided which bulges under axial compression, in resetting fashion, **characterized in that** the respective elastomer spring body (25) is made of a high-strength natural and/or synthetic rubber being largely incompressible as a spring and having a Shore-A hardness of > 60 Shore.

2. Tracklaying assembly according to claim 1, **characterized in that** the elastomer material (26) is chloroprene rubber or polyurethane rubber, having a Shore-A hardness of about 70 Shore to about 90 Shore.

3. Tracklaying assembly according to claim 1, **characterized in that** several elastomer spring bodies (25) are connected in series and/or parallel, preferably with inserted intermediate spring plates (28) and a guide pin (30) respectively passing through the central longitudinal bores (27) of the spring bodies (25).

4. Tracklaying assembly according to claim 1, **characterized in that**, when the elastomer spring body (25) not axially compressed, its axial length is greater than its outer diameter.

5. Tracklaying assembly according to claim 1, **characterized in that** the end surfaces of the elastomer spring body (25) are planar, raised or countersunk.

6. Tracklaying assembly according to claim 1, **characterized in that** in the frame (1) between the guide piece (4) in the idler wheel linear guide (L1) and the elastomer spring body (25), another linear guide (L2) for a slide piece (12) movable in the same guiding direction (F) and coupled with the guide piece (4) is provided at which the elastomer spring body (25) engages.

7. Tracklaying assembly according to claim 6, **characterized in that** the slide piece (12) is arranged as a base of a portal structure (14) having two guide strips (17) situated externally at outer portal walls (15), preferably attached to be replaceable, and that a longitudinally extending pressure element (11) is connected to a portal cross bar (16) of the portal structure.

8. Tracklaying assembly according to at least one of claims 2 to 7, **characterized in that** at least one idler wheel (2) is arranged between two parallel guide pieces (4) accommodating the idler wheel axle (3), the guide pieces (4) being interconnected in a U-shaped guiding structure component (9) via a connecting body (8), wherein, preferably at the connecting body (8), a connection (10) is provided for the longitudinally extending pressure element (11), the pressure element (11) extending to the elastomer spring body (25) actuated slide piece (12).

9. Tracklaying assembly according to claim 6, **characterized in that** at upper and lower sides of the respective guide piece (4), sliding linings (6) are arranged, preferably of a wear resistant Hardox material, and that between the guide piece (4) and each sliding lining (6) a damping layer (5) is arranged, preferably in the form of at least one plastic strip.

10. Tracklaying assembly according to claim 9, **characterized in that** the sliding lining (6) and, preferably together with the latter, the damping layer (5) are fixed by means of at least one spring fitting element (31) engaging perpendicularly to the guiding direction (F) into the guide piece (4), preferably by means of a spring steel fitting sleeve longitudinally slotted with a slot having undulated teeth.

## Revendications

1. Train de roulement à chenilles (R), en particulier pour un engin de chantier tel qu'un finisseur, avec un châssis (1) comportant un guidage linéaire de roue de tension (L1), dans lequel peut se déplacer au moins une pièce de guidage (4) dans laquelle est supporté l'essieu de roue de tension (3), qui peut être chargée dans la direction de guidage linéaire (F) par un moyen de mise sous tension (20) d'un dispositif de mise sous tension (V) s'appuyant sur le châssis (1), dans lequel est pourvu au moins un corps de ressort cylindrique intégré (25) en matière élastomère (26) pouvant se bomber en réaction à une compression axiale, avec des surfaces terminales sensiblement planes et un perçage longitudinal central pour un axe de guidage (27), comme moyen de mise sous tension (20) du dispositif de mise sous tension (V), **caractérisé en ce que** le corps de ressort en élastomère respectif (25) est constitué en caoutchouc naturel et/ou synthétique haute résistance essentiellement incompressible comme ressort, avec une dureté Shore A > 60 Shore.

2. Train de roulement à chenilles selon la revendication 1, **caractérisé en ce que** la matière élastomère (26) est un caoutchouc chloroprène ou un caoutchouc polyuréthane, préférablement avec une dureté Shore A d'environ 70 Shore à environ 90 Shore.

3. Train de roulement à chenilles selon la revendication 1, **caractérisé en ce que** plusieurs corps de ressort en élastomère (25) sont assemblés en série et/ou en parallèle, préférablement avec des coupelles de ressort intercalées (28) et traversées chacune par un axe de guidage (30) passant par les perçages longitudinaux centraux (27).

4. Train de roulement à chenilles selon la revendication 1, **caractérisé en ce que** la longueur axiale du corps de ressort en élastomère (25) non comprimé axialement est supérieure au diamètre externe.

5. Train de roulement à chenilles selon la revendication 1, **caractérisé en ce que** les surfaces terminales du corps de ressort en élastomère (25) sont planes, surélevées ou noyées.

6. Train de roulement à chenilles selon la revendication 1, **caractérisé en ce qu'**un autre guidage linéaire (L2) est pourvu dans le châssis (1) entre la pièce de guidage (4) dans le guidage linéaire de roue de tension (L1) et le corps de ressort en élastomère (25) pour une pièce coulissante (12) accouplée à la pièce de guidage (4) et pouvant coulisser dans la même direction de guidage (F), dans laquelle s'engage le corps de ressort en élastomère (25).

7. Train de roulement à chenilles selon la revendication 6, **caractérisé en ce que** la pièce coulissante (12) est agencée comme base d'une structure de portique (14) à deux barres de guidage (17) agencées à l'extérieur de parois externes de portique (15), préférablement de manière interchangeable, et à un élément de compression allongé (11) relié à la traverse du portique (16).

8. Train de roulement à chenilles selon au moins l'une des revendications 6 à 7, **caractérisé en ce qu'**au moins une roue de tension (2) est agencée entre deux pièces de guidage parallèles (4) recevant l'essieu de roue de tension (3), qui sont connectées par un corps de connexion (8) dans un élément de structure de guidage en forme de U (9), dans lequel une connexion (10) pour un élément de compression allongé (11) est préférablement pourvue sur le corps de connexion (8), qui s'étend vers la pièce coulissante (12) poussée par le corps de ressort en élastomère (25).

9. Train de roulement à chenilles selon la revendication 6, **caractérisé en ce que** des revêtements de glissement supérieur et inférieur (6), préférablement en matériau Hardox résistant à l'usure, sont agencés sur ladite pièce de guidage (4), et **en ce qu'**une couche d'amortissement (5) est agencée entre la pièce de guidage (4) et chaque revêtement de glissement (6), préférablement sous forme d'au moins une bande en plastique.

10. Train de roulement à chenilles selon la revendication 9, **caractérisé en ce que** le revêtement de glissement (6), et préférablement conjointement à celui-ci la couche d'amortissement (5), sont fixés à l'aide d'au moins un élément d'ajustement à ressort (31) s'engageant jusque dans la pièce de guidage (4) perpendiculairement à la direction de guidage (F), préférablement à l'aide d'un manchon d'ajustement en acier à ressort fendu en longueur de forme dentée et ondulée.
